# EUROPÄISCHE PATENTSCHRIFT

(11) **EP 2 810 114 B1**
(45) Veröffentlichungstag und Bekanntmachung des Hinweises auf die Patenterteilung: **03.08.2016**
(21) Anmeldenummer: 13706156.0
(22) Anmeldetag: 18.01.2013
(51) Int. Cl.: G02B 7/00, G02B 7/02

(54) **ENTKOPPELT JUSTIERBARE FASSUNGSBAUGRUPPE FÜR ZWEI OPTISCHE BAUTEILE**
DECOUPLED AND ADJUSTABLE MOUNT ASSEMBLY FOR TWO OPTICAL ELEMENTS
ASSEMBLAGE DE SUPPORTS DÉCOUPLÉS ET AJUSTABLES POUR DEUX ÉLÉMENTS OPTIQUES

(30) Priorität: 31.01.2012 DE 102012100784
(43) Veröffentlichungstag der Anmeldung: 10.12.2014
(73) Patentinhaber: JENOPTIK Optical Systems GmbH, 07745 Jena (DE)
(72) Erfinder: REICHMANN, Lutz, 07743 Jena (DE); FRANZ, Stefan, 07751 Jena (DE); BORNSCHEIN, Marco, 07749 Jena (DE); BENING, Matthias, 07745 Jena (DE)
(74) Vertreter: Waldauf, Alexander
(86) Internationale Anmeldenummer: PCT/DE2013/100017
(87) Internationale Veröffentlichungsnummer: WO 2013/113309

(56) Entgegenhaltungen:
- EP-A1- 1 020 751
- DE-A1-102008 040 218
- DE-B3-102010 035 223

## Beschreibung

Die Erfindung betrifft eine justierbare Fassungsbaugruppe in der zwei optische Bauteile zueinander sehr feinfühlig translatorisch in einer x-y-Ebene senkrecht zu einer Drehachse und rotatorisch um diese Drehachse, welche vorteilhaft die gemeinsame optische Achse der beiden optischen Bauteile ist, zueinander justierbar sind. Eine solche Fassung kann insbesondere eingesetzt werden zur Montage sogenannter Raumfilter bei denen ein Mikrolinsenarray und ein Lochblendenarray hintereinander angeordnet, zueinander justiert ausgerichtet werden müssen.

Aus der US 6,876,494 B2 ist eine Vorrichtung bekannt mit welcher Licht in einem vorgegebenen Strukturmuster auf einen Wafer projiziert wird, indem das Licht über mikrooptische Bauelemente räumlich moduliert wird. Für die Qualität der Modulation ist unter anderem die hochgenaue Justierung eines zur Vorrichtung gehörenden Mikrolinsenarrays zu einem hierzu korrespondierenden Lochblendenarray, welches in Richtung der optischen Achse des Mikrolinsenarrays hinter dem Mikrolinsenarray angeordnet ist, von Bedeutung. Als optische Achse des Mikrolinsenarrays wird eine mittlere Achse aus der Vielzahl der optischen Einzelachsen der Einzellinsen des Mikrolinsenarrays verstanden.

Die in der US 6,876,494 B2 offenbarte Vorrichtung geht von einem Stand der Technik aus, beschrieben in der JP 2001-21830, nach dem in einer gattungsgleichen Vorrichtung ein Lochblendenarray zu einem Mikrolinsenarray positioniert wird. Es wird dargelegt, dass das in der JP 2001-21830 verwendete Mikrolinsenarray aus Mikrolinsen mit einer kleinen numerischen Apertur und einer Brennweite von 5 mm besteht, weshalb eine exakte Positionierung in Richtung der optischen Achse nicht Gegenstand von Überlegungen sei. Wird jedoch ein Mikrolinsenarray verwendet, mit Mikrolinsen einer großen numerischen Apertur und einer Fokuslänge von ungefähr 250-300 µm, so sei eine hochgenaue Positionierung des Lochblendenarrays zum Mikrolinsenarray in Richtung der optischen Achse notwendig, sodass die einzelnen, durch die Mikrolinsen gebündelten Lichtanteile in die Lochblenden fokussiert werden.

Um das Mikrolinsenarray und das Lochblendenarray auf einen exakt vorgegebenen Abstand zueinander zu positionieren, wird nun gemäß der U 6,876,494 B2 vorgeschlagen, am Mikrolinsenarray oder am Lochblendenarray wenigstens einen Vorsprung zum anderen Array hin auszubilden, der in Richtung der optischen Achse eine vorgegebene Höhe aufweist und für den Abstand der Arrays bestimmend ist. So könne die relative Position der Arrays zueinander in Richtung der optischen Achse genau eingestellt werden.

Anstelle des wenigstens einen Vorsprungs könne zwischen das Mikrolinsenarray und das Lochblendenarray auch ein Distanzstück mit einer vorgegebenen Dicke eingefügt sein.

Zur Notwendigkeit der genauen Positionierung, auch senkrecht zur optischen Achse (nachfolgend Justierung in einer Ebene), sind aus der US 6,876,494 B2 keine Angaben zu entnehmen.

Die Justierung in einer Ebene ist erforderlich, um die optischen Einzelachsen der Einzellinsen des Mikrolinsenarrays mit den Symmetrieachsen der Löcher des Lochblendenarrays in Übereinstimmung zu bringen. Zur Justierung in einer Ebene ist eine Relativbewegung erforderlich die sowohl translatorische Komponenten (Wege) in einer x-y-Ebene senkrecht zur optischen Achse als auch eine rotatorische Komponente (Winkel) um die optische Achse hat, wobei die Wege und Winkel nur winzig sind.

Derartige Justierbewegungen der beiden Arrays zueinander sind bei einem mittelbaren Kontakt über ausgebildete Vorsprünge oder ein Distanzstück reibungsbehaftet, und daher stick-slipp behaftet, was eine feinfühlige, deterministische Justage in einer Größenordnung von 0,05 µm, wie sie von der Anmelderin angestrebt wird, sehr erschwert.

Justierbare Fassungen für optische Bauelemente, die eine Justierung in einer Ebene senkrecht zur optischen Achse eines optischen Systems ermöglichen, bestehen in der Regel aus einem äußeren Fassungsteil, das mit dem Gehäuse des optischen Systems fest verbunden ist oder Bestandteil des Gehäuses ist und einem inneren Fassungsteil, das das optische Bauelement trägt und zum äußeren Fassungsteil in der Ebene mittels Stellelementen verschoben und verdreht werden kann.

Bekannt sind justierbare Fassungen bei denen die Fassungsteile Einzelteile sind, die nach der Justierung zueinander fixiert werden müssen und solche, bei denen die Fassungen monolithisch hergestellt sind und die Fassungsteile selbsthemmend in der justierten Lage verbleiben, ohne dass diese fixiert werden müssen.

In der Regel wird die erstgenannte Art von Fassungen für größere Stellwege mit einer geringeren Feinfühligkeit und die zweitgenannte Art von Fassungen für kleine Stellwege mit einer hohen Feinfühligkeit verwendet.

Aus der DE 44 00 869 C1 ist eine justierbare Fassung (dort Vorrichtung zur lateralen Justierung von Linsen innerhalb eines Hochleistungsobjektives genannt) bekannt, bei der die Fassungsteile Einzelteile sind. Die Fassung besteht aus einem inneren Fassungsteil (dort Linsenfassung genannt) und einem äußeren Fassungsteil (dort erste Fassung genannt) die miteinander über eine lösbare, kraftschlüssig axial wirkende Spanneinrichtung verbunden sind.

Das innere Fassungsteil, in dem die Linse gehalten ist, wird innerhalb des äußeren Fassungsteils, das in ein Objektivgehäuse eingepasst werden kann, durch ausschließlich parallel zur optischen Achse des Objektivs wirkende Andruckkräfte gehalten, die während einer Justierung in einer Ebene senkrecht zur optischen Achse, durch Gegenkräfte, erzeugt von in dem inneren Fassungsteil angeordneten Piezotranslatoren teilweise kompensiert werden, sodass eine Verschiebung des inneren Fassungsteils innerhalb des äußeren Fassungsteils mit geringer radialer Kraftwirkung möglich ist.

Das äußere Fassungsteil weist eine innere Planfläche auf, an welcher das innere Fassungsteil über Andruckmittel angelegt ist. Vorteilhafterweise werden als Andruckmittel ein mit dem äußeren Fassungsteil fest verbundener Anlagering, ein Federring und ein Abstimmring der an der inneren Fassung angelegt ist, verwendet. Die Andruckkraft des Andruckmittels, bestimmt durch die Abmaße des Abstimmrings, sowie die Federkraft des Federrings, ist so dimensioniert, dass das innere Fassungsteil auch bei mechanischen Belastungen, z. B. beim Transport, in ihrer Lage sicher gehalten wird. Durch das ausschließliche Wirken von axialen Kräften beim Fixieren des inneren Fassungsringes soll deren mögliche Dejustierung beim Fixieren vermieden werden.

Die während der Justierung wirkende Gegenkraft, erzeugt durch die Piezotranslatoren, ist geringer als die Andruckkraft, sodass das innere Fassungsteil immer noch durch axiale Kräfte an die innere Planfläche angelegt wird und nicht undefiniert im äußeren Fassungsteil verrutschen kann. Eine Verschiebung erfolgt erst bei radialer Kraftwirkung über radial angreifende Stellelemente. Welche Stellelemente verwendet werden, hat einen wesentlichen Einfluss auf die Reproduzierbarkeit der Justierung, ihre Feinfühligkeit, den möglichen Stellweg und die Bedienerfreundlichkeit.

Vorteilhaft ist die Anordnung von vier Stellelementen um 90° zueinander versetzt. Da den Stellelementen in der Vorrichtung gemäß der DE 44 00 869 C1 keine Haltefunktion zukommt und die zu überwindende axiale Andruckkraft während der Justierung gering ist, erweist sich die Verwendung von Piezotranslatoren als Stellelemente als besonders vorteilhaft.

Aus der DE 10 2008 029 161 B3 ist eine monolithische Fassung für eine Linse bekannt. Sie besteht aus einer ringförmigen Scheibe, die durch Schlitze in ein inneres und ein äußeres Fassungsteil unterteilt sind, die miteinander bevorzugt an drei Stellen verbunden bleiben. Die verbleibenden Verbindungen, deren geometrische Form und Größe grundsätzlich durch die Lage und Gestalt der Schlitze unterschiedlich ausgeführt werden können, ist bestimmend für den möglichen Stellweg und die Feinfühligkeit der Justierung. Gemäß der DE 10 2008 029 161 B3 sind die Verbindungen durch Kniehebel gebildet, die aus zwei Gliedern bestehen, die an einem Ende miteinander über ein Festkörpergelenk verbunden sind und miteinander einen Winkel von größer 90° und kleiner 180° einschließen und deren andere Enden mit dem äußeren bzw. dem inneren Fassungsteil über Festkörpergelenke verbunden sind. Die Festkörpergelenke sind durch die Gestalt und Anordnung der Schlitze gebildete Verjüngungen.

Durch Krafteinwirkung auf die Verbindungen (auch Manipulatoreinheiten) kann das innere Fassungsteil gegenüber dem äußeren Fassungsteil innerhalb einer Ebene verschoben und verdreht werden. Monolithische Fassungen mit anders ausgeführten Manipulatoreinheiten sind z. B. aus der EP 1 577 693 A2 und DE 10 2007 030 579 A1 bekannt. Die Geometrie der Manipulatoreinheiten (Form und Dimensionierung) ist bestimmend für den möglichen Verstellweg und die Feinfühligkeit der Verstellung.

Eine Vorrichtung gemäß der DE 10 2008 029 161 B3 ist nicht geeignet, um zwei optische Bauteile, eine Baugruppe bildend, zueinander und die Baugruppe zu einer Bezugsbasis, z. B. der optischen Achse eines optischen Systems, zu justieren.

Eine justierbare Fassung in der zwei optische Bauteile, eine optische Baugruppe bildend, zueinander über einen großen Verstellbereich sehr feinfühlig justiert werden können und die Baugruppe zu einer Bezugsbasis justiert werden kann, ist in der Patentschrift DE 10 2010 035 223 B3, die auf die Anmelderin zurückgeht, beschrieben. Die DE 10 2008 040 218 A1 offenbart eine Vorrichtung zur Lagerung eines optischen Elements mit einer Fassung, die das optische Element umgibt, wobei die Fassung Strömungskanäle für ein gasförmiges oder flüssiges Fluid umfasst, wobei die Strömungskanäle so angeordnet sind, dass das Fluid unmittelbar auf das optische Element geleitet wird, so dass das optische Element zumindest in einem Lagerpunkt berührungsfrei gelagert werden kann. Die EP 1 020 751 A1 offenbart eine optische Abbildungsvorrichtung mit wenigstens einem optischen Element, das in einem Innenring gelagert ist, wobei der Innenring mit einer Außenfassung verbunden ist. Eine Manipulatoreinrichtung dient zur Verschiebung des optischen Elementes in wenigstens eine Richtung, die senkrecht zur optischen Achse liegt. Über ein System von Umfangschlitzen zwischen dem Innenring und der Außenfassung mit dazwischenliegenden Verbindungsgliedern, einem Drehgelenk zwischen dem Innenring und der Außenfassung und wenigstens einem Verstellgelenk mit einem Verstellglied zwischen Innenring und Außenfassung als Manipulatoreinrichtung wird eine deformationsarme Verschiebung des optischen Elementes erreicht.

Die hier beanspruchte Fassungsbaugruppe umfasst ein äußeres Fassungsteil und ein inneres Fassungsteil, die gemeinsam eine erste justierbare Fassung bilden. Das äußere und das innere Fassungsteil bestehen jeweils aus einem äußeren und einem inneren Fassungsrahmen, die jeweils über wenigstens drei Manipulatoreinheiten, bestehend aus Festkörpergelenken und Stellelementen, z. B. Stellschrauben, monolithisch miteinander verbunden sind. Sie stellen jeweils eine zweite bzw. eine dritte justierbare Fassung dar. In den beiden inneren Fassungsteilen sind jeweils ein optisches Bauteil fixiert, die innerhalb der Fassungsbaugruppe zueinander und gemeinsam zu einer Bezugsbasis, nämlich dem äußeren Fassungsrahmen des äußeren Fassungsteils, über die Betätigung der Manipulatoren, die an den Festkörpergelenken angreifen, justierbar sind. Als Beispiele für die gefassten optischen Bauteile sind hier ein Mikrolinsenarray und ein Raumfilterarray angegeben.

Um diese Justierungen zu ermöglichen, ist zum einen das innere Fassungsteil im äußeren Fassungsteil in einer Ebene senkrecht zu einer optischen Achse mittels Stellschrauben verschiebbar und fixierbar angeordnet. Zum anderen stehen der innere Fassungsrahmen des äußeren Fassungsteils und der äußere Fassungsrahmen des inneren Fassungsteils über eine lösbare, kraftschlüssig axial wirkenden Spanneinrichtung miteinander in Verbindung. Dadurch können bei gelöster Spanneinrichtung und fixierten, das heißt fest gezogenen Stellschrauben, die beiden optischen Bauteile durch Manipulation des äußeren Fassungsteils und des inneren Fassungsteils oder auch nur durch Manipulation eines der beiden Fassungsteile, zueinander justiert werden.

Bei fixierter, das heißt kraftschlüssig axial wirkender, das innere Fassungsteil mit dem äußeren Fassungsteil verspannender Spanneinrichtung und gelösten Stellschrauben ist eine weitere, feinfühligere Justage der beiden optischen Bauelemente zueinander durch Manipulation des inneren Fassungsteils und eine Justage beider optischer Bauteile relativ zu der Bezugsbasis durch Manipulation des äußeren Fassungsteils möglich.

Nachteilig an dieser Fassungsbaugruppe ist, dass bei der Justierung, die eingeleitete Bewegung sowohl translatorische als auch rotatorische Komponenten aufweist, was ein längeres Pröbeln erforderlich macht.

Es ist die Aufgabe der Erfindung eine Fassungsbaugruppe zu finden in der zwei gefasste optische Bauteile zueinander einfach und schnell zueinander justiert werden können. Diese Aufgabe wird für eine Fassungsbaugruppe mit den Merkmalen des Anspruches 1 gelöst. Vorteilhafte Ausführungen sind in den Unteransprüchen beschrieben.

Die Erfindung soll nachfolgend anhand von Ausführungsbeispielen und Zeichnungen näher erläutert werden. Hierzu zeigen:

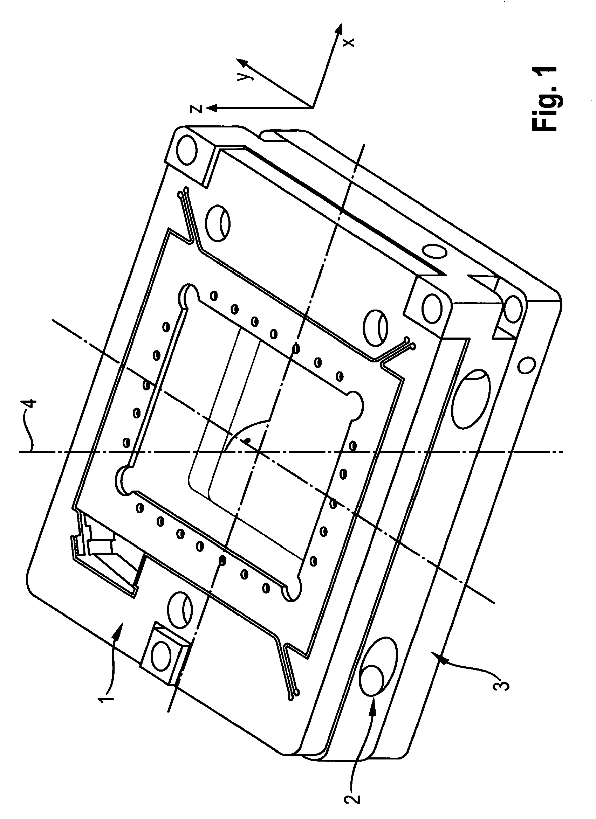

Fig. 1 eine perspektivische Ansicht einer Fassungsbaugruppe
Fig. 2a eine Draufsicht auf ein erstes Fassungsteil
Fig. 2b ein Getriebeschema für das erste Fassungsteil gemäß. Fig.2a
Fig. 3a eine Draufsicht auf ein zweites Fassungsteil
Fig. 3b ein Getriebeschema für das zweite Fassungsteil gemäß. Fig.2a mit angedeuteter translatorischer Verschiebung in y-Richtung
Fig. 3c ein Getriebeschema für das zweite Fassungsteil gemäß Fig.2a mit angedeuteter translatorischer Verschiebung in x-Richtung

Eine erfindungsgemäße Fassungsbaugruppe umfasst zwei Fassungen, nämlich eine Rotationsfassung 1 und eine Translationsfassung 2, die jeweils durch eine monolithische Platte gebildet sind, die durch Schlitze in einen äußeren Fassungsrahmen 1.1, 2.1, einen inneren Fassungsrahmen 1.2, 2.2 und diese miteinander verbindende Festkörpergelenke 1.4, 1.5, 2.4, 2.5 unterteilt sind. Die inneren Fassungsrahmen 1.2, 2.2 sind zueinander in einer x-y Ebene translatorisch verschiebbar und um eine auf der Ebene senkrecht stehende Drehachse verdrehbar.

Durch eine ausgewählte Ausführung, Kombination und Anordnung der Festkörpergelenke 1.4, 1.5, 2.4, 2.5 kann über deren Manipulation jeweils der innere Fassungsrahmen 1.2, 2.2 gegenüber dem äußeren Fassungsrahmen 1.1, 2.1 gezielt einer bestimmten, vorgegebenen Bewegungsbahn folgend, bewegt werden.

Die Rotationsfassung 1 ist dazu ausgelegt, dass bei Einleitung eines Stellweges über ein an einem der Festkörpergelenke 1.4 angreifendes Stellelement 3, eine nahezu reine Rotationsbewegung des inneren Fassungsrahmens 1.2 gegenüber dem äußeren Fassungsrahmen 1.1 um einen Justierwinkel bewirkt wird.

Die Rotationsfassung 1 weist zu diesem Zweck ein manipulierbares Festkörpergelenk 1.4 auf, an dem das Stellelement 3 angreift sowie wenigstens zwei, bzw. bevorzugt drei, in Richtung zum Zentrum der Rotationsfassung 1 steife, zwangsgelenkte Festkörpergelenke 1.5.

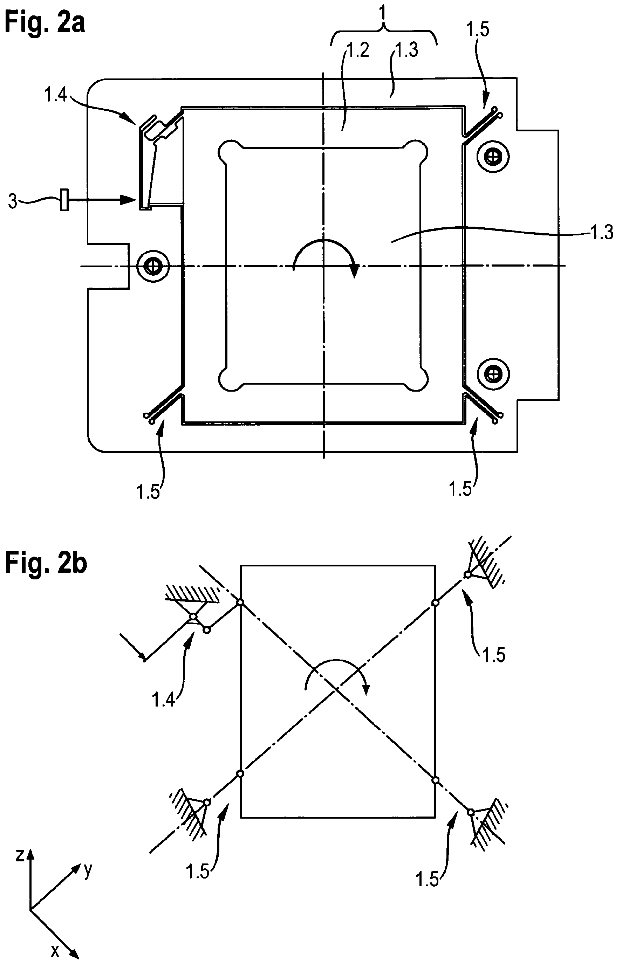

Um den Stellweg in eine Rotationsbewegung umzusetzen, sind die Festkörpergelenke der Rotationsfassung 1.4, 1.5 so ausgeführt und zueinander angeordnet, dass deren Zusammenwirkung dem in Fig. 2b dargestellten Getriebeschema entspricht.

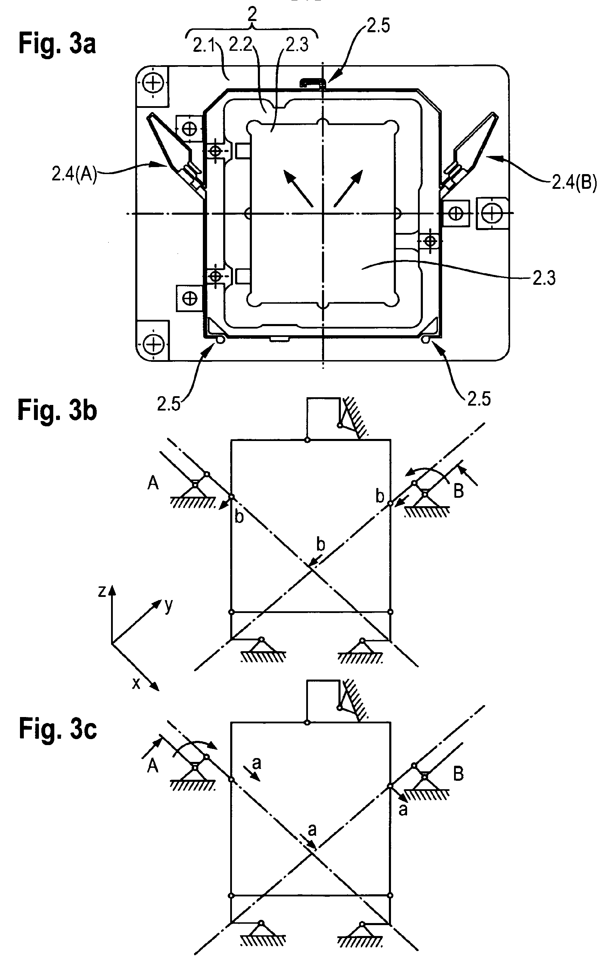

Die Translationsfassung 2 ist dazu ausgelegt, dass bei Einleitung eines Stellweges über wenigstens eines von zwei an jeweils einem der Festkörperelemente 2.4 angreifende Stellelemente 3 eine nahezu reine Translation des inneren Fassungsrahmens 2.2 gegenüber dem äußeren Fassungsrahmen 2.1 in zwei zueinander senkrechte Richtungen, die nachfolgend als x und y Richtung bezeichnet werden, um Justierwege a, b bewirkt wird. Die Translationsfassung 2 weist zu diesem Zweck zwei manipulierbare Festkörpergelenke 2.4 auf, an denen jeweils eines der beiden Stellelemente 3 angreift sowie wenigstens zwei, bzw. bevorzugt drei, senkrecht zur Richtung der auf das Zentrum der Translationsfassung 2 steife, zwangsgelenkte Festkörpergelenke 2.5. Um die Stellwege in eine Translationsbewegung umzusetzen, sind die Festkörpergelenke der Translationsfassung 2.4, 2.5 so ausgeführt und zueinander angeordnet, dass deren Zusammenwirkung dem in den Fig. 3b und 3c dargestellten Getriebeschema entspricht.

Tatsächlich ist weder die Translationsbewegung noch die Rotationsbewegung eine reine Translations- bzw. Rotationsbewegung. Bei den kleinen Verstellungen, wie sie jedoch mit der Fassungsbaugruppe vollzogen werden sollen, sind die jeweils anderen Komponenten unwesentlich. Vorteilhaft kann die Fassungsbaugruppe zur Justierung eines z.B. in der Rotationsfassung gefassten optischen Bauteils 1.3 in Form eines Mikrolinsenarrays und eines dann entsprechend in der Translationsfassung gefassten optischen Bauteils 2.3 in Form eines Lochblendenarrays zueinander verwendet werden.

Die Größenordnung des Justierwinkelbereiches und des Justierwegebereiches innerhalb denen die Justierung vollzogen wird, soll anhand nachfolgend angegebener beispielhafter Maße der beiden Arrays verdeutlicht werden. Die Löcher des Lochblendenarrays haben einen Durchmesser von 4 µm und die Einzellinsen des Mikroarrays eine Brennweite von 180 µm. Die Abstände der optischen Einzelachsen der Einzellinsen sowie der Symmetrieachsen der Löcher zueinander beträgt 40 µm in einem orthogonalem Raster. Die Toleranz für eine Lageabweichung der Einzelachsen zu den Symmetrieachsen liegt in einem Bereich von 100 nm.

Eine erfindungsgemäße Fassungsbaugruppe hat einen translatorischen Verstellbereich über Justierwege von ca. 30 µm und einen rotatorischen Verstellbereich über einen Justierwinkel von ca.3,5'. Die Empfindlichkeit für die Verstellung beträgt ca. 50 nm bzw. 2".

Um im Rahmen dieser Verstellbereiche die beiden optischen Bauteile in einen justierten Zustand bringen zu können, werden die Rotationsfassung 1 und die Translationsfassung 2 zueinander vorjustiert, bevor deren äußere Fassungsrahmen 1.1, 2.1, die zueinander verstellbar und fixierbar sind, zueinander fixiert werden. Hierfür sind geeignete Mittel vorgesehen, die nicht Gegenstand dieser Anmeldung sind. Ebenfalls nicht Gegenstand dieser Anmeldung sind Mittel die eine Einstellung des Abstandes der beiden Fassungen 1, 2 zueinander in Richtung der optischen Achse ermöglichen, um die Brennpunkte der Einzellinsen mit einer Toleranz von z. B. 10 µm in die Lochmittel zu legen.

Wie bereits angeführt, können die Festkörpergelenke 1.4, 1.5, 2.4, 2.5 der Fassungsbaugruppe in manipulierbare Festkörpergelenke 1.4, 2.4 und zwangsgelenkte Festkörpergelenke 1.5, 2.5 eingeteilt werden.

Die manipulierbaren Festkörpergelenke 1.4, 2.4 stehen jeweils mit einem Stellelement 3, was z. B. ein Piezostellelement oder eine Stellschraube ist, in Verbindung. Ein über das Stellelement 3 eingeleiteter Stellweg wird in einem Übersetzungsverhältnis, bestimmt durch die Ausführung des manipulierbaren Festkörpergelenkes 1.4, 2.4, auf den inneren Fassungsrahmen 1.2, 2.2 als eine übersetzte Stellbewegung übertragen.

In dem Ausführungsbeispiel für eine Fassungsbaugruppe, mit einer Rotationsfassung 1, dargestellt in Fig. 2a und einer Translationsfassung 2, dargestellt in Fig. 3a, sollen die manipulierbaren Festkörpergelenke 1.4, 2.4 so ausgebildet sein, dass sie getriebetechnisch betrachtet jeweils einen, im äußeren Fassungsrahmen 1.1, 2.1 drehbar gelagerten Hebel darstellen, mit einem ersten, freien Ende, an welchem das Stellelement 3 angreift und einem zweiten Ende, welches mit einem Ende einer Koppel verbunden ist, deren anderes Ende mit dem inneren Fassungsrahmen 1.2, 2.2 in Verbindung steht.

Dass ein über das Stellelement 3 eingeleiteter Stellweg zum einen zu einer translatorischen und zum anderen zu einer rotatorischen Verstellung des inneren Fassungsrahmens 1.2, 2.2 führt, wird im wesentlichen durch die unterschiedliche Ausführung der zwangsgeführten Festkörpergelenke 1.5, 2.5 und deren Anordnung zur Wirkrichtung der übersetzten Stellbewegung erreicht.

Die Rotationsfassung 1 weist wenigstens zwei, in Richtung zum Zentrum der Rotationsfassung 1 steife, zwangsgelenkte Festkörpergelenke 1.5 auf, die als gerade Koppel ausgeführt und so zueinander angeordnet sind, dass sich ihre gedachte Verlängerungen im Zentrum der Rotationsfassung 1 und damit des in der Rotationsfassung gefassten optischen Bauteils schneiden. In dem so gebildeten Schnittpunkt liegt das Drehzentrum der Fassungsbaugruppe. Gegenüber einer Verschiebung in Richtung der geraden Koppel sind die zwangsgeführten Festkörpergelenke 1.5 starr. Damit wird ein seitliches Ausweichen des inneren Fassungsrahmens 1.2 - im Vergleich dessen Rotation um das Drehzentrum - durch eine wesentlich höhere Steifigkeit behindert. Zur Erhöhung der Steifigkeit der Verbindung des inneren Fassungsrahmens 1.2 mit dem äußeren Fassungsrahmen 1.1 können weitere Festkörpergelenke 1.5 vorgesehen sein, die sämtlich so orientiert sind, dass ihre gedachte Verlängerung durch das Drehzentrum verläuft. Somit sind alle Freiheitsgrade des inneren Fassungsrahmens 1.2 relativ zum äußeren Fassungsrahmen 1.1, mit Ausnahme der Rotation um das Drehzentrum, mit ausreichender Steifigkeit eingeschränkt.

Das manipulierbare Festkörpergelenk der Rotationsfassung 1.4 verbindet den äußeren Fassungsrahmen 1.1 mit dem inneren Fassungsrahmen 1.2 so, dass dessen Koppel in einer Richtung tangential zum Drehzentrum angeordnet ist und legt damit ebenfalls den verbliebenen Freiheitsgrad der Rotation des inneren Fassungsrahmens 1.2 relativ zum äußeren Fassungsrahmen 1.1 um das Drehzentrum fest. Wird das manipulierbare Festkörpergelenk 1.4 betätigt, so verschiebt sich dessen Koppel in tangentialer Richtung, wodurch der innere Fassungsrahmen 1.2 um das Drehzentrum 1.4, 1.5, 2.4, 2.5 rotiert. Idealerweise verläuft die gemeinsame optische Achse der beiden Bauteile durch das Drehzentrum. In jedem Fall ist die durch das Drehzentrum verlaufende Drehachse, um die die Rotation stattfindet, eine zur gemeinsamen optischen Achse parallele Achse. Eine gemeinsame optische Achse haben die beiden Bauteile erst nachdem die translatorische Justierung abgeschlossen ist.

Die Translationsfassung 2 weist zwei manipulierbare Festkörpergelenke 2.4 (A, B) auf, die in einer Ebene, auf der die Drehachse 4 senkrecht steht, angeordnet sind und deren jeweilige Wirkungsrichtungen (a, b) in dieser Ebene liegen und senkrecht aufeinander stehen, siehe hierzu Fig. 3a - 3c. Wenigstens zwei zwangsgelenkte Festkörpergelenke 2.5 verbinden zusätzlich den äußeren Fassungsrahmen 2.1 mit dem inneren Fassungsrahmen 2.2. Die zwangsgelenkten Festkörpergelenke 2.5 sind steif in einer Richtung senkrecht zur Richtung auf das Zentrum der Translationsfassung 2. Sie sind so ausgeführt, dass sie in den Wirkrichtungen a, b der beiden manipulierbaren Festkörpergelenke 2.4 in ihrem Zusammenwirken eine etwa gleiche Steifigkeit und damit Vorzugsrichtungen aufweisen. Konstruktiv wird dies erreicht indem die zwangsgelenkten Festkörpergelenke 2.5 als abgewinkelte Koppel ausgeführt sind, mit gleich langen Schenkeln und einen rechten Winkel miteinander einschließend.

Entsprechend der Erfindung ist jedem manipulierbaren Festkörpergelenk der Translationsfassung 2.4 ein zwangsgeführtes Festkörpergelenk 2.5 so zugeordnet, dass die Verlängerung der geraden Koppel der manipulierbaren Festkörpergelenke 2.4 jeweils als Symmetrielinie durch die abgewinkelten Koppeln verlaufen.

Wird z. B. das manipulierbare Festkörpergelenk 2.4-A, siehe Fig. 3c, betätigt, so wird der innere Fassungsrahmen 2.2 am Anbindungspunkt des manipulierbaren Festkörpergelenkes 2.4-A entlang der Wirkrichtung a verschoben. Das nicht betätigte manipulierbare Festkörpergelenk 2.4-B wirkt gleichzeitig wie ein zwangsgelenktes Festkörpergelenk 2.5 und führt den inneren Fassungsrahmen 2.2 in die Wirkrichtung a während es die Vorzugsrichtung der zusammenwirkenden zwangsgelenkten Festkörpergelenke 2.5 senkrecht zur betätigten Wirkrichtung, das heißt die Wirkrichtung b, blockiert. Da die zwangsgelenkten Festkörpergelenke 2.5 in ihrem Zusammenwirken nur eine verbleibende Vorzugrichtung entlang der Wirkrichtung des betätigten manipulierbaren Festkörpergelenkes haben, führen diese im Zusammenwirken mit dem nicht betätigten manipulierbaren Festkörpergelenk z.B. 2.4-B eine nahezu ausschließlich translatorische Bewegung entlang der Wirkrichtung a des betätigten manipulierbaren Festkörpergelenks 2.4-A aus. Gleiches gilt bei Betätigung des manipulierbaren Festkörpergelenks 2.4-B in analoger Weise bezüglich der Wirkrichtung b.

Durch die Anordnung der manipulierbaren Festkörpergelenke 2.4 unter einem Winkel von 90° in einer Ebene, das heißt die Verlängerungen ihrer Koppeln schneiden sich im nicht ausgelenkten Zustand unter einem Winkel von 90° im Zentrum der Translationsfassung 2, werden zwei translatorische Bewegungsrichtungen bereitgestellt, x, y, die in der Größenordnung der vorzunehmenden Manipulation als orthogonal zueinander betrachtet werden können.

Es sei ausdrücklich darauf hingewiesen, dass die vorangehende Beschreibung der Anordnung der Festkörpergelenke zueinander, sich auf eine unausgelenkte Fassungsbaugruppe bezieht, das heißt die Rotationsfassung 1 und die Translationsfassung 2 sind jeweils in einem unverspannten Zustand. Ein erfindungswesentlicher Vorteil einer erfindungsgemäßen Fassungsbaugruppe liegt in der Entkopplung der Justierbewegungen in einer Ebene in translatorische und rotatorische Bewegungen, wobei diese unbeeinflusst voneinander durchgeführt werden können. Die Justierung kann dadurch einfacher und schneller durchgeführt werden.

### Bezugszeichenliste

- 1: Rotationsfassung
- 1.1: äußerer Fassungsrahmen der Rotationsfassung
- 1.2: innerer Fassungsrahmen der Rotationsfassung
- 1.3: in der Rotationsfassung gefasstes optisches Bauteil
- 1.4: manipulierbares Festkörpergelenk der Rotationsfassung
- 1.5: zwangsgelenktes Festkörpergelenk der Rotationsfassung

- 2: Translationsfassung
- 2.1: äußerer Fassungsrahmen der Translationsfassung
- 2.2: innerer Fassungsrahmen der Translationsfassung
- 2.3: in der Translationsfassung gefasstes optisches Bauteil
- 2.4: manipulierbares Festkörpergelenk der Translationsfassung
- 2.5: zwangsgelenktes Festkörpergelenk der Translationsfassung

- 3: Stellelement
- 4: Drehachse
- a, b: Wirkrichtungen der translatorischen Justierwege

## Patentansprüche

1. Entkoppelt justierbare Fassungsbaugruppe zum Justieren zweier optischer Bauteile zueinander, mit einer Rotationsfassung (1) und einer Translationsfassung (2), wobei
a) die Rotationsfassung (1) und die Translationsfassung (2) jeweils aus einem äußeren Fassungsrahmen (1.1, 2.1) und einem inneren Fassungsrahmen (1.2, 2.2) bestehen, die jeweils monolithisch über in einer Ebene senkrecht zu einer Drehachse (4) angeordnete manipulierbare Festkörpergelenke (1.4, 2.4) und mindestens zwei zwangsgelenkte Festkörpergelenke (1.5, 2.5) miteinander verbunden sind, Stellelemente (3) zur Manipulation der manipulierbaren Festkörpergelenke (1.4, 1.5) vorhanden sind und in den inneren Fassungsrahmen (1.2, 2.2) jeweils ein optisches Bauteil (1.3, 2.3) fixiert ist,
b) die Rotationsfassung (1) genau eines der manipulierbaren Festkörpergelenke (1.4) aufweist, an dem eines der Stellelemente (3) angreift, die zwangsgelenkten Festkörpergelenke der Rotationsfassung (1.5) in Richtung zum Zentrum der Rotationsfassung (1) steif ausgeführt sind und dieses manipulierbare Festkörpergelenk (1.4) und die zwangsgelenkten Festkörpergelenke der Rotationsfassung (1.5) so ausgelegt und zueinander angeordnet sind, dass bei Einleitung eines Stellweges über dieses Stellelement (3) eine Rotation ihres inneren Fassungsrahmens (1.2) gegenüber ihrem äußeren Fassungsrahmen (1.1) um einen Justierwinkel um die Drehachse (4) bewirkt wird,
c) die Translationsfassung (2) genau zwei der manipulierbaren Festkörpergelenke (2.4) aufweist, an denen jeweils eines der Stellelemente (3) angreift, die zwangsgelenkten Festkörpergelenke der Translationsfassung (2.5) in einer Richtung senkrecht zur Richtung zum Zentrum der Translationsfassung (2) steif und diese manipulierbaren Festkörpergelenke (2.4) und die zwangsgelenkten Festkörpergelenke der Translationsfassung (2.5) so ausgelegt und zueinander angeordnet sind, dass bei Einleitung eines Stellweges über ein erstes ihrer zwei Stellelemente (3) auf eines ihrer manipulierbaren Festkörpergelenke (2.4) eine Translation ihres inneren Fassungsrahmens (2.2) gegenüber ihrem äußeren Fassungsrahmen (2.1) um einen Justierweg in x-Richtung und bei Einleitung eines Stellweges über ein zweites ihrer zwei Stellelemente (3) auf ein anderes ihrer manipulierbaren Festkörpergelenke (2.4) eine Translation ihres inneren Fassungsrahmens (2.2) gegenüber ihrem äußeren Fassungsrahmen (2.1) um einen Justierweg in y-Richtung bewirkt wird und die x-Richtung und die y-Richtung orthogonal aufeinander und zur optischen Achse (4) stehen und
d) der äußere Fassungsrahmen der Rotationsfassung (1.2) und der äußere Fassungsrahmen der Translationsfassung (2.1) zueinander verstellbar und fixierbar, miteinander in Verbindung stehen, **dadurch gekennzeichnet, dass**
die manipulierbaren Festkörpergelenke (1.4, 2.4) so ausgebildet sind, dass sie getriebetechnisch betrachtet jeweils einen, im äußeren Fassungsrahmen (1.1, 2.1) drehbar gelagerten Hebel darstellen, mit einem ersten freien Ende, an welchem das Stellelement (3) angreift und einem zweiten Ende, welches mit einem Ende einer Koppel verbunden ist, deren anderes Ende mit dem inneren Fassungsrahmen (1.2, 2.2) in Verbindung steht und die zwangsgelenkten Festkörpergelenke der Translationsfassung (2.5) als abgewinkelte Koppel ausgeführt sind und die Koppeln gleich lange Hebelarme aufweisen, die einen rechten Winkel miteinander einschließen und jedem manipulierbaren Festkörpergelenk der Translationsfassung (2.4) ein zwangsgeführtes Festkörpergelenk (2.5) so zugeordnet ist, dass die Verlängerung der Koppeln der manipulierbaren Festkörpergelenke (2.4) jeweils als Symmetrielinie durch die abgewinkelten Koppeln verlaufen.

2. Fassungsbaugruppe nach Anspruch 1, **dadurch gekennzeichnet, dass** die Rotationsfassung (1), wenigstens zwei zwangsgelenkte Festkörpergelenke (1.5) aufweist, die als gerade Koppel ausgeführt sind und so zueinander angeordnet sind, dass sich ihre gedachten Verlängerungen im Zentrum der Rotationsfassung (1) schneiden.

3. Fassungsbaugruppe, nach Anspruch 1, **dadurch gekennzeichnet, dass** das manipulierbare Festkörpergelenk der Rotationsfassung (1.4) den äußeren Fassungsrahmen (1.1) mit dem inneren Fassungsrahmen (1.2) so verbindet, dass dessen Koppel in einer Richtung tangential zum Drehzentrum angeordnet ist.

4. Fassungsbaugruppe nach Anspruch 1, **dadurch gekennzeichnet, dass** die manipulierbaren Festkörpergelenke der Translationsfassung (2.4) so zueinander angeordnet sind, dass Verlängerungen ihrer Koppeln sich unter einem Winkel von 90° schneiden.

## Claims

1. Independently adjustable mount assembly for adjusting two optical components in relation to each other, having a rotational mount (1) and a translational mount (2), wherein
a) the rotational mount (1) and the translational mount (2) each comprise an outer mount frame (1.1, 2.1) and an inner mount frame (1.2, 2.2), which are each connected to each other monolithically via manipulable solid body joints (1.4, 2.4) arranged in a plane perpendicular to an axis of rotation (4), and at least two forcibly deflected solid body joints (1.5, 2.5), there are actuating elements (3) for manipulating the manipulable solid body joints (1.4, 1.5), and in each case an optical component (1.3, 2.3) is fixed in the inner mount frame (1.2, 2.2),
b) the rotational mount (1) has exactly one of the manipulable solid body joints (1.4), on which one of the actuating elements (3) acts, the forcibly deflected solid body joints of the rotational mount (1.5) are implemented to be rigid in the direction toward the centre of the rotational mount (1) and this manipulable solid body joint (1.4) and the forcibly deflected solid body joints of the rotational mount (1.5) are designed and arranged in relation to one another such that, when an actuating travel is introduced via this actuating element (3), a rotation of the inner mount frame (1.2) thereof with respect to the outer mount frame (1.1) thereof by an adjustment angle about the axis of rotation (4) is effected,
c) the translational mount (2) has exactly two of the manipulable solid body joints (2.4), on which in each case one of the actuating elements (3) acts, the forcibly deflected solid body joints of the translational mount (2.5) are rigid in a direction perpendicular to the direction toward the centre of the translational mount (2), and these manipulable solid body joints (2.4) and the forcibly deflected solid body joints of the translational mount (2.5) are designed and arranged in relation to one another such that, when an actuating travel is introduced via a first of the two actuating elements (3) thereof onto one of the manipulable solid body joints (2.4) thereof, a translation of the inner mount frame (2.2) thereof with respect to the outer mount frame (2.1) thereof about an adjustment travel in the x direction is effected and, when an actuating travel is introduced via a second of the two actuating elements (3) thereof onto another of the manipulable solid body joints (2.4) thereof, a translation of the inner mount frame (2.2) thereof with respect to the outer mount frame (2.1) thereof about an adjustment travel in the y direction is effected, and the x direction and the y direction are orthogonal to each other and to the optical axis (4), and
d) the outer mount frame of the rotational mount (1.2) and the outer mount frame of the translational mount (2.1) are connected to each other such that they can be adjusted and fixed in relation to each other, **characterized in that**
the manipulable solid body joints (1.4, 2.4) are formed in such a way that, considered in terms of movement, they each constitute a lever rotatably mounted in the outer mount frame (1.1, 2.1), having a first free end, on which the actuating element (3) acts and a second end, which is connected to one end of a coupler, the other end of which is connected to the inner mount frame (1.2, 2.2) and the forcibly deflected solid body joints of the translational mount (2.5) are implemented as angled couplers and the couplers have equally long lever arms, which enclose a right angle with each other, and each manipulable solid body joint of the translational mount (2.4) is assigned a forcibly guided solid body joint (2.5) such that the extension of the couplers of the manipulable solid body joints (2.4) each run as a line of symmetry through the angled couplers.

2. Mount assembly according to Claim 1, **characterized in that** the rotational mount (1) has at least two forcibly deflected solid body joints (1.5), which are implemented as straight couplers and are arranged in relation to each other such that the imaginary extensions thereof intersect in the centre of the rotational mount (1).

3. Mount assembly according to Claim 1, **characterized in that** the manipulable solid body joint of the rotational mount (1.4) connects the outer mount frame (1.1) to the inner mount frame (1.2) such that the coupler thereof is arranged in a direction tangential to the centre of rotation.

4. Mount assembly according to Claim 1, **characterized in that** the manipulable solid body joints of the translational mount (2.4) are arranged in relation to one another such that extensions of the couplers thereof intersect at an angle of 90°.

## Revendications

1. Assemblage de supports découplés et ajustables pour ajuster deux éléments optiques l'un par rapport à l'autre, avec un support rotatif (1) et un support de translation (2),
a) le support rotatif (1) et le support de translation (2) étant respectivement composés d'un cadre de support extérieur (1.1, 2.1) et d'un cadre de support intérieur (1.2, 2.2), qui sont respectivement reliés l'un avec l'autre de manière monolithique par des articulations monolithiques (1.4, 2.4) manipulables disposées dans un plan perpendiculairement à un axe de rotation (4) et au moins deux articulations monolithiques (1.5, 2.5) articulées par force, des éléments de réglage (3) étant existants pour la manipulation des articulations monolithiques (1.4, 1.5) manipulables et un élément optique (1.3, 2.3) étant respectivement fixé dans le cadre de support intérieur (1.2, 2.2),
b) le support rotatif (1) comportant exactement une des articulations monolithiques (1.4) manipulables sur laquelle vient en prise un des éléments de réglage (3), les articulations monolithiques articulées par force du support rotatif (1.5) étant exécutées de façon rigide dans la direction du centre du support rotatif (1) et cette articulation monolithique (1.4) manipulable et les articulations monolithiques articulées par force du support rotatif (1.5) étant conçues et disposées l'une par rapport à l'autre de telle manière que lors de l'initiation d'un parcours de réglage par cet élément de réglage (3), une rotation de son cadre de support intérieur (1.2) par rapport à son cadre de support extérieur (1.1) est activée d'un angle d'ajustage autour de l'axe de rotation (4),
c) le support de translation (2) comportant exactement deux des articulations monolithiques (2.4) manipulables sur lesquelles vient respectivement en prise un des éléments de réglage (3), les articulations monolithiques articulées par force du support de translation (2.5) étant conçues de façon rigide dans une direction perpendiculairement à la direction du centre du support de translation (2) et ces articulations monolithiques (2.4) manipulables et les articulations monolithiques articulées par force du support de translation (2.5) étant conçues et disposées l'une par rapport à l'autre de telle manière que lors de l'initiation d'un parcours de réglage par un premier de ses deux éléments de réglage (3) sur une de ses articulations monolithiques (2.4) manipulables, une translation de son premier cadre de support (2.2) intérieur par rapport à son cadre de support extérieur (2.1) correspondant à un parcours d'ajustage dans une direction x est mise en oeuvre et lors de l'initiation d'un parcours de réglage par un deuxième de ses deux éléments de réglage (3) sur une autre de ses articulations monolithiques (2.4) manipulables, une translation de son cadre de support intérieur (2.2) par rapport à son cadre de support extérieur (2.1) correspondant à un parcours d'ajustage dans une direction y est mise en oeuvre et la direction x et la direction y étant orthogonales l'une sur l'autre et par rapport à l'axe optique (4) et
d) le cadre de support extérieur du support rotatif (1.2) et le cadre de support extérieur du support de translation (2.1) étant en liaison l'un avec l'autre, réglables et fixables l'un par rapport à l'autre, **caractérisé en ce que**
les articulations monolithiques manipulables (1.4, 2.4) sont constituées de telle manière que, considérées du point de vue technique des mécanismes, elles présentent respectivement un levier logé pouvant tourner dans le cadre de support extérieur (1.1, 2.1), avec une première extrémité libre sur laquelle vient en prise l'élément de réglage (3) et une deuxième extrémité, laquelle est reliée à une extrémité d'un couplage dont l'autre extrémité est en liaison avec le cadre de support intérieur (1.2, 2.2) et les articulations monolithiques articulées par force du support de translation (2.5) sont exécutées sous la forme de couplages coudés et les couplages comportent des bras de levier de même longueur qui comprennent ensemble un angle droit et une articulation monolithique (2.5) guidée par force est attribuée à chaque articulation monolithique manipulable du support de translation (2.4) de telle manière que la prolongation des couplages des articulations monolithiques manipulables (2.4) passe respectivement en tant que ligne symétrique par les couplages coudés.

2. Assemblage de supports selon la revendication 1, **caractérisé en ce que** le support rotatif (1) comporte au moins deux articulations monolithiques articulées par force (1.5) qui sont exécutées comme couplages droits et disposées l'une par rapport à l'autre de telle manière que leurs prolongations envisagées se croisent au centre du support rotatif (1).

3. Assemblage de supports selon la revendication 1, **caractérisé en ce que** l'articulation monolithique manipulable (1.4) du support rotatif relie le cadre de support extérieur (1.1) au cadre de support intérieur (1.2) de telle manière que le couplage de ceux-ci est disposé dans une direction tangentielle au centre de rotation.

4. Assemblage de supports selon la revendication 1, **caractérisé en ce que** les articulations monolithiques manipulables du support de translation (2.4) sont disposées l'une par rapport à l'autre de telle manière que les prolongations de leurs couplages se croisent sous un angle de 90°.
